(19) Europäisches Patentamt / European Patent Office / Office européen des brevets

(11) **EP 3 104 961 B1**

(12) **EUROPEAN PATENT SPECIFICATION**

(45) Date of publication and mention
of the grant of the patent:
**29.08.2018 Bulletin 2018/35**

(51) Int Cl.:
***B01D 53/40*** *(2006.01)*　　　***B01D 53/50*** *(2006.01)*
***B01D 53/68*** *(2006.01)*

(21) Application number: **15705555.9**

(22) Date of filing: **10.02.2015**

(86) International application number:
**PCT/EP2015/052739**

(87) International publication number:
**WO 2015/118165 (13.08.2015 Gazette 2015/32)**

(54) **REACTIVE COMPOSITION BASED ON SODIUM BICARBONATE AND PROCESS FOR ITS PRODUCTION**

REAKTIVE ZUSAMMENSETZUNG AUF DER BASIS VON NATRIUMBICARBONAT UND VERFAHREN ZU DEREN HERSTELLUNG

COMPOSITION RÉACTIVE À BASE DE BICARBONATE DE SODIUM ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.02.2014 EP 14154411**
**06.06.2014 EP 14171595**

(43) Date of publication of application:
**21.12.2016 Bulletin 2016/51**

(73) Proprietor: **Solvay SA**
**1120 Bruxelles (BE)**

(72) Inventors:
• **THIJSSEN, Marc**
**B-3090 Overijse (BE)**

• **PERRIN, Patrick**
**E-39300 Barreda Torrelavega (ES)**
• **KABBABE MALAVE, Jorge Alejandro**
**F-54000 Nancy (FR)**

(74) Representative: **Teipel, Stephan et al**
**Lederer & Keller**
**Patentanwälte Partnerschaft mbB**
**Unsöldstrasse 2**
**80538 München (DE)**

(56) References cited:
**WO-A1-97/16376**　　**WO-A1-97/16377**
**WO-A1-2013/137416**　　**FR-A1- 2 926 027**
**US-A- 3 868 444**　　**US-A1- 2010 290 965**

**Description**

**TECHNICAL FIELD**

The invention relates to a reactive composition based on sodium bicarbonate. It relates more particularly to a reactive composition which can be used to purify a flue gas comprising impurities, for example a flue gas produced by the incineration of waste or the combustion of fossil fuels for the production of electricity. The invention also relates to a process for the production of this reactive composition and to a process for the purification of flue gases using it.

**TECHNICAL BACKGROUND**

Incineration is a technology which is becoming essential for the removal of household or municipal waste. The incineration of household waste is accompanied by the formation of a flue gas generally comprising hydrogen chloride. It is essential to remove the hydrogen chloride from the flue gas before discharging the latter to the atmosphere.

During the combustion of coal, for example in order to produce electricity, flue gases are emitted comprising sulphur oxides as acidic impurities.

A known process for purifying a flue gas comprising acidic compounds consists in treating the flue gas with sodium bicarbonate, so as to neutralize hydrogen chloride or sulphur oxides and to form sodium chloride or sodium sulphates.

More particularly, a process has been provided in which sodium bicarbonate is injected in the powder form into the flue gas exiting from the incinerator and the flue gas thus treated is subsequently sent to a filter (Solvay & Cie, brochure TR 895/5c-B-1-1290). In this known process, the flue gas has a temperature of less than 260°C at the point of injection of the sodium bicarbonate. The latter is employed in the form of a graded powder obtained by grinding, 90 % by weight of which is in the form of particles with a diameter of less than 16 $\mu$m.

In practice, the sodium bicarbonate powder employed in this known process also comprises sodium carbonate.

WO 95/19835 discloses a reactive composition based on sodium bicarbonate which has a high bicarbonate content and which is provided in the form of a powder formed of particles, the particles having a specific distribution of dimensions. This composition is remarkably effective but is expensive.

In order to be able to generalize the application of purification treatments to the flue gases produced by industrial processes, it is important in many cases to reduce the cost of the reactants used.

EP 0 858 429 describes a composition comprising at least 80 % of sodium bicarbonate, less than 20 % by weight of sodium carbonate, from 0.2 % to 0.7 % by weight of ammonia, expressed as ammonium ions, and 2 to 10 % by weight of water. This composition, obtained by heat treatment of crude bicarbonate from an ammonia-soda plant, however releases high amounts of ammonia ($NH_3$) when stored, in particular in closed atmospheres. This generates rapidly ammonia concentrations above toxicity thresholds that are detrimental to the health of people handling such composition. EP0858428 describes a similar composition. The invention is targeted at providing a reactive composition based on sodium bicarbonate which can be used in treatments for the purification of flue gases, presenting high amount of ammonia compounds useful in flue gas mitigation of nitrogen oxides by catalytic conversion to nitrogen, though releasing less ammonia during storage and handling than known compositions of the prior art. Moreover, the invention relates also to a process that renders possible to produce this composition under advantageous economic conditions.

**SUMMARY OF THE INVENTION**

The invention consequently relates to a reactive composition comprising between 80 % and 98 % by weight of sodium bicarbonate, between 1 % and 12 % by weight of sodium carbonate and between 0.02 % and 2.0 % by weight of ammonia, defined as being gaseous ammonia ($NH_3$) released by distillation of an aqueous solution obtained by dissolving the composition in deionized water alkalinized with caustic soda at pH of more than 11 and expressed in the form of ammonium ions $NH_4^+$, characterized in that the composition comprises less than 0.9 % by weight, preferably less than 0,8 % by weight of water measured by the loss of weight during 16 hours of a sample placed in a ventilated lab oven heated at 30 °C, and wherein the composition is in the form of particles having a diameter $D_{90}$ of less than 50 $\mu$m and a diameter $D_{50}$ of less than 35 $\mu$m, measured by laser diffractometry.

**DETAILED DESCRIPTION OF THE INVENTION**

Before the present formulations of the invention are described, it is to be understood that this invention is not limited to particular formulations described, since such formulations may, of course, vary. It is also to be understood that the terminology used herein is not intended to be limiting, since the scope of the present invention will be limited only by the appended claims.

As used herein, the singular forms "a", "an", and "the" include both singular and plural referents unless the context clearly dictates otherwise. By way of example, "an additive" means one additive or more than one additives.

The terms "comprising", "comprises" and "comprised of' as used herein are synonymous with "including", "includes" or "containing", "contains", and are inclusive or open-ended and do not exclude additional, non-recited members, elements or method steps. It will be appreciated that the terms "comprising", "comprises" and "comprised of' as used herein comprise the terms "consisting of', "consists" and "consists of'.

Throughout this application, the term "about" is used to indicate that a value includes the standard deviation of error for the device or method being employed to determine the value.

As used herein, the term "average" refers to number average unless indicated otherwise.

As used herein, the terms "% by weight", "wt %", "weight percentage", or "percentage by weight" are used interchangeably.

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g. from 1.0 to 5.0 includes both 1.0 and 5.0). Any numerical range recited herein is intended to include all sub-ranges subsumed therein.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

In the following passages, different alternatives, embodiments and variants of the invention are defined in more detail. Each alternative and embodiment so defined may be combined with any other alternative and embodiment, and this for each variant unless clearly indicated to the contrary or clearly incompatible when the value range of a same parameter is disjoined. In particular, any feature indicated as being preferred or advantageous may be combined with any other feature or features indicated as being preferred or advantageous.

Furthermore, the particular features, structures or characteristics described in present description may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art.

The invention can be defined by the features according to the following items:

Item 1. Reactive composition comprising between 80 % and 98 % by weight of sodium bicarbonate, between 1 % and 12 % by weight of sodium carbonate and between 0.02 % and 2.0 % by weight of ammonia, defined as being gaseous ammonia ($NH_3$) released by distillation of an aqueous solution obtained by dissolving the composition in deionized water alkalinized with caustic soda at pH of more than 11 and expressed in the form of ammonium ions $NH_4^+$, characterized in that the composition comprises less than 0.9 % by weight of water measured by the loss of weight during 16 hours of a sample placed in a ventilated lab oven heated at 30 °C, and wherein the composition is in the form of particles having a diameter $D_{90}$ of less than 50 $\mu$m and a diameter $D_{50}$ of less than 35 $\mu$m, measured by laser diffractometry.

Item 2. Reactive composition according to item 1 wherein and the composition is in the form of particles having a diameter $D_{90}$ of less than 35 $\mu$m and a diameter $D_{50}$ of less than 20 $\mu$m, preferably a diameter $D_{90}$ of less than 30 $\mu$m and a diameter $D_{50}$ of less than 15 $\mu$m, measured by laser diffractometry.

Item 3. Composition according to one of the preceding items comprising between 2 % and 12 % by weight of sodium carbonate.

Item 4. Composition according to one of the preceding items, comprising between 85 % and 95 % by weight of sodium bicarbonate.

Item 5. Composition according to one of the preceding items, comprising from 0.02 % to 0.17 % by weight of ammonia, defined as being gaseous ammonia ($NH_3$) released by distillation of an aqueous solution obtained by dissolving the composition in deionized water alkalinized with caustic soda at pH of more than 11 and expressed in the form of ammonium ions $NH_4^+$.

Item 6. Composition according to one of items 1 to 4, comprising from 0.2 % to 0.7 % by weight of ammonia, defined as being gaseous ammonia ($NH_3$) released by distillation of an aqueous solution obtained by dissolving the composition in deionized water alkalinized with caustic soda at pH of more than 11 and expressed in the form of ammonium ions $NH_4^+$.

Item 7. Composition according to one of items 1 to 4 comprising more than 0.7 % and less than 2.0 % by weight of ammonia, defined as being gaseous ammonia ($NH_3$) released by distillation of an aqueous solution obtained by dissolving the composition in deionized water alkalinized with caustic soda at pH of more than 11 and expressed in the form of ammonium ions $NH_4^+$.

Item 8. Composition according to one of the preceding items, comprising from 0.01 % to 5 % by weight of additives selected from zeolites, dolomite, magnesium hydroxide, magnesium (hydroxy) carbonate, lime, calcium carbonate, sodium chloride, zinc chloride, sodium sulphate, calcium fluoride, hydrocarbons, talc, lignite coke, activated carbon or active charcoal, fatty acids and fatty acid salts.

Item 9. Process for the production of a composition according to one of the preceding items, according to which :

- particles resulting from crude bicarbonate particles from an ammonia-soda plant are introduced into a gas stream at a temperature of more than 30°C comprising air, in order to form a gas stream laden with particles;
- the gas stream laden with particles is introduced into a mill in order to form a gas stream comprising ground particles having a diameter a $D_{90}$ of less than 50 $\mu$m and a diameter $D_{50}$ of less than 35 $\mu$m, preferably a diameter $D_{90}$ of less than 35 $\mu$m and a diameter $D_{50}$ of less than 20 $\mu$m, even more preferably a diameter $D_{90}$ of less than 30 $\mu$m and a diameter $D_{50}$ of less than 15 $\mu$m measured by laser diffractometry.

Item 10. Process according to item 9, in which the crude bicarbonate particles from an ammonia-soda plant have a water content of at most 15 % in weight, preferably at most 12 %, more preferably at most 10 %, and even more preferably at most 8 % in weight of water before being introduced into the gas stream.

Item 11. Process for the purification of a flue gas comprising acidic impurities, such as hydrogen chloride or sulphur oxides, according to which a reactive composition according to one of items 1 to 8 is introduced into the flue gas, at a temperature of 100 to 600°C, and the flue gas is subsequently subjected to a filtration or a dedusting.

Item 12. Process according to item 11 wherein the flue gas subjected to a filtration is, subsequently the filtration, subjected to a selective catalytic reduction of nitrogen oxides (SCR DeNOx).

The inventors have observed, as a first advantage, that such a reactive composition presents a reduced release of ammonia when stored or handled compared to previously known compositions, though being still very effective for numerous applications, in particular for the treatment of flue gases, despite its lower bicarbonate content compared to standard technical sodium bicarbonate.

In the invention, the ammonia is defined as being gaseous ammonia ($NH_3$), adsorbed and absorbed in the particles based on sodium bicarbonate and the remaining moisture, as released, by heating at 30°C during two hours.

In a first embodiment, it is advantageous for the ammonia under consideration to also comprise the gaseous ammonia released by heating at 120°C during 2 hours, of the ammonium bicarbonate, ammonium carbonate, ammonium carbamate, sodium carbamate and other instable ammonium compounds at this temperature. In a second embodiment, which is the preferred form (so-called alkaline distillation method), the ammonia comprises also the ammonia released by distillation of an aqueous solution obtained by dissolving the sample in deonized water alkalinized with caustic soda at pH more than 11, and enabling the measurement of ammonium species such as ammonium bicarbonate, ammonium carbonate, ammonium carbamate, sodium carbamate, ammonium chloride, and other ammonium salts such as the ammonium salts contained in crude sodium bicarbonate obtained from the ammonia Solvay process. In a third embodiment, the ammonia comprises any ammonia-comprising entity. In this case, the total nitrogen, expressed in the form of ammonium ions, is measured. The three of these embodiments can be applied to all the embodiments described in this account, in which embodiments an ammonia content is specified.

The determination according to the invention and the first embodiment of the ammonia expressed in the form of ammonium ions $NH_4^+$ of a product sample is done by capturing the released gaseous ammonia ($NH_3$) from the heating operation by condensation in a scrubber with a HCl solution to transform the ammonia into $NH_4^+$, which is analysed by a colorimeter.

The determination according to the second embodiment of the ammonia expressed in the form of ammonium ions $NH_4^+$ of a product sample is done by measurement with a spectro-colorimeter Docteur Lange X-500 on 150 mL of distillate from distilling a solution of 50 g of product, 150 mL of deionized water and 90 mL of a solution of caustic soda NaOH 9N. Cuvettes Dr Lange LCK 304, range 0.02 - 2.5 mg $NH_4^+$/L are used.

The determination according to the third embodiment of the ammonia expressed in the form of ammonium ions $NH_4^+$ of a product sample is done by measurement by spectrophotometry of a solution sample by using a kit of Dr Lange LCK 338 Total Nitrogen, range 20 -100 mg/L. Inorganically and organically bonded nitrogen is oxidized to nitrate by digestion with peroxodisulphate. The nitrate ions react with 2.6-dimethylphenol in a solution of sulphuric and phosphoric acid to form a nitrophenol. Alternatively the determination according to the third embodiment of the ammonia expressed in the form of ammonium ions $NH_4^+$ of a product sample is done by transforming all the ammonia species ($NH_4Cl$, $NH_4HCO_3$, sodium carbamate, ammonium carbamate) into acidic form of $NH_4^+$, and then potentiometric titration of $NH_4^+$ with NaClO in a bicarbonate assay medium according the following reaction :

$$2\ NH_4^+ + NaClO \rightarrow NaCl + 2H^+ + 3\ H_2O + N_2$$

For this determination 5 g of the product sample is dissolved into 50 ml of deionized water in presence of methyl orange as pH indicator (pH 3.1-4.4), acidified with $H_2SO_4$ 2N down to orange colour change, then 50 ml of a saturated solution with sodium bicarbonate is added, and the point of equivalence when adding a NaClO solution of 0.2N, is determined by potentiometry.

In the present invention, the composition is provided in the form of particles having a diameter $D_{90}$ of less than 50 μm and a diameter $D_{50}$ of less than 35 μm, preferably a diameter $D_{90}$ of less than 35 μm and a diameter $D_{50}$ of less than 20 μm, more preferably a diameter $D_{90}$ of less than 30 μm and a diameter $D_{50}$ of less than 15 μm, measured by laser diffractometry. When the particles of the composition have a diameter $D_{90}$ of less than 30 μm and a diameter $D_{50}$ of less than 15 μm, it is even more advantageous that the $D_{50}$ to be less than 12 μm, preferably less than 10 μm.

Indeed, it has been observed in the applications for the treatment of flue gases, that the combination between the specific distribution of the diameters of the particles of the composition according to the invention, having a few large particles, and between the specific content of ammonia has appeared essential for its effectiveness. The ammonia content has a beneficial effect on the catalytic reduction of nitrogen oxides, on the height of the specific surface ($m^2/g$ BET) of the bicarbonate particles after thermal transformation into sodium carbonate and thus on the efficiency of the sorbent. Without wishing to be committed to a theoretical explanation, the inventors believe that this second advantage of present reactive composition is due to the ammonia content closely related to the particle size distribution, with which it is in equilibrium.

Advantageously the reactive composition of the present invention comprises between 2 % and 12 %, preferably between 2% and 10% by weight of sodium carbonate.

It is recommended that the reactive composition comprises between 85 % and 95 % by weight of sodium bicarbonate.

In an advantageous embodiment, the reactive composition is provided in the form of particles having a particles size distribution slope σ of less than 2.

The particles size distribution slope σ is defined by :

$$\sigma = \frac{D_{90} - D_{10}}{D_{50}}$$

$D_{90}$, respectively $D_{50}$ and $D_{10}$, represent the equivalent diameter for which 90 % (respectively 50 % and 10 %) of the weight of the particles of the reactive composition have a diameter of less than $D_{90}$ (respectively $D_{50}$ and $D_{10}$). These particle size parameters are defined by the laser ray diffraction analytical method.

Advantageously the reactive composition of present composition is a powder with a free flowing density of at least 0.4, preferably at least 0.45, more preferably at least 0.50 kg/dm$^3$. Generally the free flowing density of the reactive composition of present composition is at most 0.8, or at most 0.7, or at most to 0.6, or at most 0.55 kg/dm$^3$, preferably of 0.45 to 0.55 kg/dm$^3$.

In an alternative form of the reactive composition according to the invention, the composition comprises between 85 % and 95 % by weight of sodium bicarbonate.

According to a first variant of the invention, the composition comprises between 0.02 % and 0.17 % by weight of ammonia, expressed in the form of ammonium ions $NH_4^+$. This first variant is particularly advantageous for use of the composition in animal food, as ammonia release is particularly low in closed environment. Such compositions show also particularly low caking behaviour during storage in silos or big bags.

According to a second variant of the invention, the composition comprises from 0.2 % to 0.7 % by weight of ammonia, expressed in the form of ammonium ions $NH_4^+$. This second variant is advantageous for providing larger ammonia amount in flue gas mitigation use, and though presenting a lower ammonia release at room temperature during storage compared to prior art.

According to a third variant of the invention, the composition comprises more than 0.7 % and less than 2.0 % by weight of ammonia, more advantageously more than 0.8 % and less than 2.0 % by weight of ammonia, expressed in the form of ammonium ions $NH_4^+$. This second variant is advantageous for providing larger ammonia amount in flue gas mitigation use, and is particularly advantageous with the above described specific distribution of the diameters of the particles of the composition, having a few large particles, showing an improved effect on the catalytic reduction of nitrogen oxides. In the present invention, the reactive composition comprises less than 0.9 % by weight of water. Generally, the reactive composition comprises at most 0.8 %, advantageously at most 0.7 %, even more advantageously at most 0.5 % by weight of water. There is no need for the present composition to have very low amount of water to provide a decreased release of ammonia during storage. Moreover a very low amount of water is detrimental to the quality of the reactive composition, as most of the techniques of drying sodium bicarbonate, lead also to a loss of sodium bicarbonate and to an increase of sodium carbonate content. The reactive composition comprises generally at least 0.01 %, or at least 0.05 %, or at least 0.1 %, or at least 0.2 % by weight of water. The amount of water ('free water' due to liquid water absorbed on the composition (to be distinguished to linked water to the crystals of sodium carbonate such as for instance sodium carbonate monohydrate crystals)) is measured by the loss of weight during 16 hours of a sample placed in a ventilated lab oven heated at 30°C.

The reactive composition according to the invention can also comprise one or more solid or liquid additives in order to improve, for example, the storage or flowability thereof, or to improve effectiveness of the product in flue gas treatment. Some additives can also further reduce the release of gaseous ammonia and ammonia smell by the composition at room temperature. The additives are advantageously selected from zeolites, dolomite, magnesium hydroxide, magnesium (hydroxy) carbonate, lime, calcium carbonate, sodium chloride, zinc chloride, sodium sulphate, calcium fluoride, hydrocarbons, talc, lignite coke, active charcoal, fatty acids and fatty acid salts.

The reactive composition according to the invention can preferably comprise from 0.01 % to 5 % by weight of additives.

Advantageously, the fatty acids are fatty acid molecules comprising 12 to 20 carbon atoms ($C_{12}$-$C_{20}$ fatty acid). More advantageously, the fatty acid is selected from lauric acid, myristic acid, palmitic acid, linoleic acid, oleic acid, stearic acid, and mixtures thereof. Stearic acid is preferred. It is particularly advantageous that the corresponding fatty acid (i.e. the fatty acid or the fatty acid counter part of the fatty acid salt) have a melting point of less than 80°C, preferably less than 75°C.

Fatty acid salts are advantageously selected from calcium, or magnesium acid salts or soaps of the fatty acids. More advantageously, the calcium or magnesium fatty acid salts are selected from calcium or magnesium salt of: lauric acid, myristic acid, palmitic acid, linoleic acid, oleic acid, stearic acid, and mixtures thereof. Fatty acid salt is preferably selected from calcium stearate, magnesium stearate.

The invention also relates to a process for the production of the reactive composition according to the invention. It has been observed that a minimum temperature is needed to decrease the amount of water in compositions such as the ones described supra, in particular in crude sodium bicarbonate from an ammonia soda plant. In particular the invention relates to a process for the production of the composition according the present invention, according to which particles resulting from crude bicarbonate particles from an ammonia-soda plant are thermally treated at a temperature of more than 30°C. More particularly in this process :

- particles resulting from crude bicarbonate particles from an ammonia-soda plant are introduced into a gas stream generally comprising air in order to form a gas stream laden with particles;
- the gas stream laden with particles is introduced into a mill in order to form a gas stream comprising ground particles having a diameter $D_{90}$ of less than 50 $\mu$m and a diameter $D_{50}$ of less than 35 $\mu$m, preferably a diameter $D_{90}$ of less than 35 $\mu$m and a diameter $D_{50}$ of less than 20 $\mu$m, more preferably a diameter $D_{90}$ of less than 30 $\mu$m and a diameter $D_{50}$ of less than 15 $\mu$m measured by laser diffractometry.

In the present process, the temperature of the gas stream wherein the humid mixture comprising particles is introduced into, is preferably more than 40°C, more preferably more than 50°C, even more preferably more than 60°C, or more than 70°C, or more than 80°C.

In the present process the particles resulting from crude bicarbonate particles from an ammonia-soda plant comprises generally at most 20 % of water. It is advantageous that the crude bicarbonate particles comprise at most 15 %, preferably at most 12 %, more preferably at most 10 %, and even more preferably at most 8 %, or even at most 6 % in weight of water before being introduced into the gas stream. For lowering the water content of the particles resulting from crude bicarbonate particles, it is advantageous that the crude bicarbonate to be 'dewatered' in a dryer, such as a fluidized bed. In general the particles resulting from crude bicarbonate particles from an ammonia-soda plant comprises at least 2 %, more advantageously at least 3 % by weight of water when they are introduced into the gas stream.

In particular, such a minimum content of water (at least 2 %, more advantageously at least 3 % by weight of water) of the particles resulting from crude bicarbonate particles is beneficial when additives (selected from zeolites, dolomite, magnesium hydroxide, magnesium (hydroxy) carbonate, lime, calcium carbonate, sodium chloride, zinc chloride, sodium sulphate, calcium fluoride, hydrocarbons, talc, lignite coke, activated carbon or active charcoal, fatty acids and fatty acid salts), are added to the particles to form a humid mixture comprising particles and additives before being introduced in the gas stream or before the additives and the particles resulting from crude bicarbonate particles are co-introduced into the mill. Indeed such water content of the mixture improves adhesion of the additives on particles of the composition and enables an improved adhesion of the additives on the particles resulting from crude bicarbonate particles.

In this process, the reactive composition is produced starting from crude bicarbonate particles from an ammonia-soda plant. This sodium bicarbonate is the product obtained by carbonation, with a gas comprising $CO_2$, of an ammoniacal brine. The particles formed at the end of the carbonation are separated from the slurry by filtration, in order to form the crude bicarbonate particles from an ammonia-soda plant. The ammoniacal brine is obtained by reaction of ammonia with a sodium chloride solution. The crude bicarbonate from an ammonia-soda plant comprises predominantly sodium bicarbonate but also sodium carbonate, ammonia, some other compounds in small amounts and water. In the complete industrial process for the production of sodium bicarbonate, the crude sodium bicarbonate is successively calcined (in order to produce "light" sodium carbonate, this calcination moreover producing $CO_2$), then dissolved, recarbonated with $CO_2$ and finally recrystallised. This transformation sequence exhibits a high cost, in particular a high energy cost (especially the calcination and recrystallisation). The use in the process according to the invention of crude bicarbonate particles from a soda plant is thus of marked economic advantage. The inventors have observed that, when this product is ground in order to obtain a particle size distribution having a diameter $D_{90}$ of less than 50 $\mu$m and a diameter $D_{50}$ of less than 35 $\mu$m, the amount of water can be decreased to values well below 1 % by weight without sensitively impacting the sodium bicarbonate content, which is not the case when drying coarse particles resulting from crude bicarbonate particles from an ammonia-soda plant. The ammonia content of the ground crude bicarbonate from a soda plant can be controlled with the temperature of the thermal treatment and its duration. Moreover part of the gas stream from the thermal treatment remains generally at equilibrium around values of between 0.02 % and 0.2 % by weight, expressed as $NH_4^+$.

In some cases, for example when the ammonia content of the crude bicarbonate from a soda plant is too high, it is recommended for the crude bicarbonate particles from an ammonia-soda plant to be washed using a washing liquid before being introduced into the gas stream.

In the present invention, it is generally recommended to remove the excess liquid, i.e. "dewatering" the crude sodium bicarbonate, for example by passing over a belt filter, in a centrifuge, a rotary filter or in a drying machine. The product can subsequently sometimes advantageously be dried. The drying of the particles can be realized on any appropriate equipment. Advantageously the drying is operated in a conveyor tunnel heated with hot gas, a fluid bed heated with hot gas, a fluidized bed heated indirectly with internal steam tubes, an agitated dryer, a rotary dryer, a direct heated rotary dryer with hot gas, an indirect heated rotary dryer heated with steam, a flash pneumatic conveyor dryer, or a gravity dryer. The drying can be performed as batch drying (loading the product in the dryer, drying and emptying the dryer) or as continuous drying operation (continuously feeding and continuously removing the dried product from the dryer). It is advantageous that the particles resulting from the crude bicarbonate after pre-drying comprises 2 % to 8 % of water, preferably 2 % to 6 % of water before said particles are introduced into the gas stream at a temperature of more than 30°C. For the drying operation the temperature is, for example, between 30 and 130°C or between 50 and 120°C, or preferably between 55 and 85°C. Stream gas up to 250°C can be used for the thermal treatment. Though the final temperature of the composition is generally lower due to water evaporation. The final temperature is preferably at most 130°c, preferably at most 100°C, more preferably at most 85°C, even more preferably at most 80°C. Then the dried product forming the composition comprises less than 0.9 % by weight of water, or at most 0.8 %, or at most 0.7 %, or preferably at most 0.5 %, more preferably at most 0.3 % by weight of water. If high amount of sodium bicarbonate is desired, the contact time of the composition with hot gasses is to be limited. The more the temperature of hot gasses after water evaporation is, the shorter the contact time is to be. After the drying of the composition, it is recommended that the composition to be cooled down to at most 50°C, preferably to at most 40°C, more preferably to at most 35°C. This enables to avoid further bicarbonate decomposition and ammonia release when handling and storing the composition.

The gas stream comprising the ground particles resulting from the mill can be used directly, for example in the treatment of flue gases. However, in a recommended alternative form of the process according to the invention, the gas stream comprising the ground particles is introduced into a gas/solid separator in order to provide, on the one hand, a gas stream comprising air and ammonia and, on the other hand, the reactive composition. The latter can then be supplied and used as is, for example in the treatment of flue gases, without requiring additional grinding or preparation. The reactive composition can be packaged, for example in bags, or stored in silos or containers.

It has been observed that the grinding operation in itself, probably as a result of the mechanical and thermal energy transferred to the reactive composition, has a favourable effect on its content of ammonia, which is then in equilibrium with the sodium bicarbonate and is further released only when the composition is heated. This effect is displayed in particular when the crude bicarbonate particles from an ammonia-soda plant have, before grinding, a diameter $D_{90}$ of greater than 100 $\mu$m, preferably of greater than 120 $\mu$m, and a diameter $D_{50}$ of greater than 60 $\mu$m, preferably of greater than 70 $\mu$m. In some cases, it can be advantageous to preheat the gas stream into which the particles are introduced, for example to a temperature of at least 45°C. As the grinding of the composition needs mechanical energy, part of this mechanical energy is dissipated during the milling into thermal energy rising the temperature inside the mill. A temperature of at least about 50°C in the mill is essential to decrease the amount of water to less than 1 % by weight of the thermally treated crude bicarbonate.

In an alternative form of the invention, the grinding is carried out in an impact mill. In the context of this alternative form, the impact mills are mills in which the material to be ground is subjected to the impact of moving mechanical parts which have the effect of smashing the particles of the material. Impact mills are well known in the art of fine grinding.

They comprise in particular (nonexhaustive list) hammer mills or pin mills, "attritor" mills, bead mills and cage mills. Hammer mills are advantageously equipped with selectors.

As mentioned above, in order to improve the flowability and generally the flow properties of the reactive composition, one or more additives, advantageously selected from zeolites, dolomite, magnesium hydroxide, magnesium (hydroxy) carbonate, lime, calcium carbonate, sodium chloride, zinc chloride, sodium sulphate, calcium fluoride, hydrocarbons, talc, lignite coke, activated carbon or active charcoal, fatty acids and fatty acid salts, is (are) sometimes added to the composition. The fatty acid or fatty acid salt is preferably selected from calcium stearate, magnesium stearate and soaps. Some of these additives additionally have a beneficial effect during the use of the reactive composition. For example, calcium carbonate, lime or activated carbon or active charcoals have a beneficial effect when the reactive composition is used in the treatment of flue gas, in particular for the purification from hydrogen fluoride.

In an advantageous alternative form of the process according to the invention, the solid or liquid additive or additives are introduced into the gas stream in an amount varying from 0.01 % to 20 % by weight. It is sometimes preferable for this introduction to take place upstream of the mill, or just when the gas stream enters the mill. This is because it has been observed that these additives can also have a beneficial effect on the operation of the mill.

The invention also relates to the reactive composition which can be obtained by the process according to the invention. This composition is then obtained under highly advantageous conditions, starting from crude bicarbonate from an ammonia-soda plant. This composition is also obtained under very favourable energy conditions, as it requires neither the calcination nor the recrystallisation which are necessary to produce the normal sodium bicarbonates. The energy saving has a positive environmental impact.

Finally, the invention also relates to a process for the purification of a flue gas comprising acidic impurities, for example hydrogen chloride or sulphur oxides, according to which a reactive composition according to the invention, which can preferably be obtained by the process according to the invention, is introduced into the flue gas, at a temperature of 125 to 600°C, and the flue gas is subsequently subjected to a filtration. In particular flue gas comprising hydrogen chloride or sulphur dioxide are treated with the process according to the invention so that hydrogen chloride be less than 10 or less than 5 mg $HCl/Nm^3$ dry, and/or so that sulphur dioxide be less than 50 or less than 40 mg $SO2/Nm^3$ dry (at 11 % $O_2$). When the flue gas comprises nitrogen oxides ("NOx"), the process advantageously comprises a catalyst in order to treat the NOx, the catalyst being preferably incorporated into the filter. The ammonia content of the reactive composition according to the invention has a beneficial effect on the operation of the catalyst, as in the hot flue gas the composition will release gaseous ammonia (NH3), and by substitution up to 24 % of ammonia consumption can be saved.

Therefore the present invention also relates to a process for the purification of a flue gas comprising acidic impurities, for example hydrogen chloride or sulphur oxides, according to which a reactive composition according the present invention is introduced into the flue gas, at a temperature of at least 100 or at least 125°C, and generally at most 600°C, the flue gas is subsequently subjected to a filtration, and then subsequently subjected to a selective catalytic reduction of nitrogen oxides (SCR DeNOx).

In one embodiment of the process for the purification of a flue gas comprising dust, acidic impurities, such as hydrogen halides or sulphur oxides, and comprising nitrogen oxides (NOx), the flue gas is optionally first dedusted so that to remove at least part of dust, then a reactive composition according present invention is injected in the at least partly dedusted flue gas so that to absorb at least part of the acidic impurities, the resulting flue gas is then subsequently subjected to a filtration such as a bag filter to remove part of reacted reactive composition, and the flue gas is subsequently subjected to a selective catalytic reduction of nitrogen oxides (SCR DeNOx).

In the purification process according to the invention, the filtration can be performed using any filtering or separating means, for instance ceramic of metallic filters. Sleeve filters, in which the filtration takes place through a cloth, or electrostatic separators or multi cyclones are advantageous.

In the purification process according to the invention, it is recommended that the freeing of the flue gas from dust be carried out more than 2 seconds, advantageously from 3 to 6 seconds, after the introduction of the reactive composition into the flue gas.

In the purification process according to the invention, the filtration equipment can integrate also the catalyst for the SCR DeNOx operation. This, simplifies the process and reduces the investment costs.

**Example 1 (not according the invention)**

Particles of crude bicarbonate from an ammonia-soda plant, having a content of 74 % by weight of sodium bicarbonate, 9 % by weight of sodium carbonate, 0.8 % by weight of ammonia expressed as ammonium ions $NH_4^+$, in the form of ammonium bicarbonate, ammonium carbonate, ammonium carbamate, sodium carbamate, 15 % by weight of water, and having a particle size distribution such that the diameter $D_{50}$ has a value of 80 $\mu$m and the diameter $D_{90}$ has a value of 150 $\mu$m, are treated under air at 30°C.

The crude bicarbonate is heated in a glass reactor equipped with a jacket thermostatically controlled at 30 degrees centigrade.

After 2 hours, it is found that the value of the total ammonia no longer shows any substantial variation, even after treatment for approximately ten hours.

The final product, that is to say after treating for two hours, comprises 84 % by weight of sodium bicarbonate, 10 % by weight of sodium carbonate, 0.6 % by weight of ammonia expressed as ammonium ions $NH_4^+$, 3.4 % by weight of water, the remainder being composed of a negligible amount of sodium chloride.

Fifty grams of the product treated thermally is stored in a polyethylene bottle of 250 ml. After 24 hours of storage at room temperature (25°C) the polyethylene bottle is opened. The smell of ammonia is qualified as 'strong' by a laboratory operator, therefore with an ammonia concentration in the surrounding gas in equilibrium with the composition of more than 200 ppm $NH_3$ in volume.

**Example 2 (according the invention)**

Particles of crude bicarbonate from an ammonia-soda plant, having a chemical composition similar to the one of example 1, having a particle size distribution such that the diameter $D_{50}$ has a value of 80 $\mu$m and the diameter $D_{90}$ has a value of 150 $\mu$m, are washed in a rotating filtering device fed continuously with water, constituting the washing liquid. An aqueous solution, comprising ammonia, is extracted from the rotating filtering device. The particles are subsequently introduced into a dryer. The particles, having a water content of less than 2 %, are introduced into a stream of air (7) itself entering a hammer mill with selector. The stream of air comprising the ground particles of sodium bicarbonate, gaseous ammonia and water vapour, both released from the particles during the grinding, is finally introduced into a sleeve filter. The following are extracted therefrom; on the one hand, a stream of air comprising water vapour and ammonia and, on the other hand, sodium bicarbonate particles having the properties shown in Table 1.

**Table 1**

| $D_{90}$ | $D_{50}$ | $NaHCO_3$ | $Na_2CO_3$ | $NH_4^+$ | $H_2O$ |
|---|---|---|---|---|---|
| 22 $\mu$m | 9,6 $\mu$m | 90 % | 8 % | 0.4 % | 0.5 % (< 1%) |

The ammonia content of the sodium bicarbonate particles, expressed as $NH_4^+$, has been evaluated by comparing their total $NH_4$ content before and after heating at 30°C during 2 hours. Total $NH_4$ was measured by alkaline distillation, described as being the second alternative determination.

Fifty grams of the product treated thermally according the process of present invention is stored in a polyethylene bottle of 250 ml. After 24 hours of storage at room temperature (25°C) the polyethylene bottle is opened. The smell of ammonia is qualified as 'light' by the same laboratory operator as example 1, therefore with an ammonia concentration in the surrounding gas in equilibrium with the composition of less than 150 ppm $NH_3$ in volume.

**Example 3**

The example which is described below, with reference to the single appended figure, illustrates a specific embodiment of the invention.

Particles (1) of crude bicarbonate from an ammonia-soda plant, having a content of approximately 1 % by weight of ammonia and having a particle size distribution such that the diameter $D_{50}$ has a value of 80 $\mu$m and the diameter $D_{90}$ has a value of 150 $\mu$m, are washed in a rotating filtering device (A) fed continuously with water, constituting the washing liquid (2). An aqueous solution (3), comprising ammonia, is extracted from the rotating filtering device (A). The particles (4) are subsequently introduced into a dryer (B). The particles (5), having a water content of less than 2 %, are introduced into a stream of air (7) itself entering a hammer mill with selector (C). Amounts by weight (6) of two calcium based additives of totalling 1,2 % of the amount of particles (5) are also introduced into the mill (C). The stream of air (8) comprising the ground particles of sodium bicarbonate, gaseous ammonia and water vapour, both released from the particles during the grinding, is finally introduced into a sleeve filter (D). The following are extracted therefrom; on the one hand, a stream of air (9) comprising water vapour and ammonia and, on the other hand, sodium bicarbonate particles (10) having the properties shown in Table 2.

**Table 2**

| $D_{90}$ | $D_{50}$ | $H_2O$ | $NaHCO_3$ | $Na_3CO_3$ | Additives |
|---|---|---|---|---|---|
| 22 $\mu$m | 9,6 $\mu$m | <1 % | >85 % | <11 % | 1.1 % |

The ammonia content of the sodium bicarbonate particles, expressed as $NH_4^+$, has been evaluated by com-

paring their total $NH_4$ content before and after heating at 30°C during 2 hours. Total $NH_4$ was measured by alkaline distillation, described as being the second alternative determination.

The result was 0,3 g/kg.

The ammonia content of the particles exiting the rotating filtering device (A) was also measured. A value of 3,8 g/kg was found. Comparison with the value for the ground particles illustrates the effect of the invention.

**Example 4 (according the invention)**

120 kg of an ammoniacal sodium bicarbonate from Solvay process, exiting from a rotative filter after a carbonation column (such as described in Ullmann's Encyclopedia of Industrial Chemistry Sodium carbonate, page Vol. 33 page 307) comprising 13.7 % water is let to be dried on a polyethylene film one night at about 23°C to obtain a dewatered ammoniacal sodium bicarbonate with a water content of about 6 % of water. The dewatered ammoniacal sodium bicarbonate is then introduced with hot air at 80°C into a pin mill UPZ100 Hozokawa Alpine. The obtained composition is then separated from the gas on a bag filter. The temperature of the gas exiting the bag filter is 55°C. The obtained composition comprises (weight percentage): 89.8 % $NaHCO_3$, 7.4 % $Na_2CO_3$, 0.8 % total ammonia expressed as $NH_4^+$ measured by the alkaline distillation method, 0.06 % water. The measured laser $D_{90}$ is 25 $\mu$m.

**Example 5**

200 grams of the similar samples of reactive compositions comprising different ammonia content and obtained as in example 3 (with less than 1 % of water) are conditioned in a climatic chamber on a stainless steel plate with a powder thickness of 1.5 +/-0.5 cm, during 40 minutes,_at different temperature and relative humidity (RH) conditions:

- 25°C and 40 % RH
- 25°C and 75 % RH
- 50°C and 75 % RH

Then part of the samples is introduced in 500 ml polyethylene bottles so that to fill about 250 ml of the reactive composition in powder form, and then to be able to measure the ammonia ($NH_3$) released in the atmosphere during storage.

The bottles are let during 40 minutes at room temperature (about 22°C) so that the atmosphere of the bottle is enriched in ammonia gas. Then the gas present in the polyethylene bottle is pumped out with a determined gas volume (corrected from measured ambient atmospheric pressure) through Draeger tube to measure the ammonia ($NH_3$) content of the gas within the storage bottle (Draeger ammonia 5/a tubes range 5-600 ppm).

Results obtained with the reactive compositions are reported in table 3 (25°C - 75 % RH).

**Table 3 - Results with climatic conditioning at 25°C - 75 % RH of Example 5**

| Samples | Nber | 1 | 2 | 3 | 4 | 5 | 6 |
|---|---|---|---|---|---|---|---|
| | Ref | 3601-15 | 3628-14 | 3601-14 | 3624-15 | 3601-15 | BNL |
| Total $NH_4^+$ content of sample % | %$NH_4^+$ | 0,48 | 0,61 | 0,58 | 0,38 | 0,64 | 0,96 |
| $NH_3$ gas concentration | | $NH_3$ ppm | | | | | |
| Crude Bicarb. (Example 4) | $NH_3$ ppm | 150 | 200 | 200 | 100 | 150 | >610 |

**Example 6**

Similar tests as example 5, have been realized, showing the importance of low water content (less than 1% by weight) and particle size ($D_{90}$ of less than 100 $\mu$m and $D_{50}$ less than 75 $\mu$m) on the reactive composition to reduce ammonia release during storage and logistic handling of product with low particle size. A batch from crude sodium bicarbonate obtained from the ammonia Solvay process (comprising about 0.6% $NH_4^+$), was divided in three lots, each are partially dried at ambient temperature at respectively slightly above: 12%, 5% and less than 1% water content.

Each lot of reactive composition was conditioned 40 minutes at 25°C 75% relative humidity in a climatic chamber; for this, each lot was spread on a stainless steel plate with a layer of 1.5 +/ 0.5 cm of thickness.

Then part of the composition was taken and analyzed in remaining water content, 200 g sample of the preconditionned composition with measured and indicated water content in table 4, was introduced in polyethylene bottles of 500 ml volume, bottles were closed, put again in the climatic chamber at 25°C, and then after 40 minutes the bottles were opened and the gas in the bottles has been extracted with a pump and gas counter, and the gas was measured in ammonia content (expressed in ppm by weight). The result of ammonia concentration in the storage gas above the reactive composition is given in table 4.

Comparatively samples with at least 1% water content (5% and 11% water) of small particle size ($D_{90}$ 50 $\mu$m, $D_{50}$ 30 $\mu$m), showed an increased ammonia release during storage compared to small particle size with less than 1% water content. This was not the case for the same batch with coarser particles (before grinding): the ammonia release during the storage is the same for well dried samples of coarse particle size ($D_{90}$ 200 $\mu$m) whatever the water content (less than 1%: 0.2%, or 5% or 12% water) was. They release more ammonia gas in their storage environment, at ambient temperature (25°C) than samples of fine particle size and low water content.

**Table 4** - **Tests results of Example 6**

| Water content of samples | Coarse composition ($D_{90}$ 200 $\mu$m) | Grinded composition with a mortar ($D_{90}$ 50 $\mu$m, $D_{50}$ 30 $\mu$m) |
|---|---|---|
| $H_2O$ < 1% | $H_2O$ = 0.2 %wt<br>$NH_3$ odor: concentration in bottle gas = 50 ppm | $H_2O$ = 0.2 %wt<br>$NH_3$ odor : concentration in bottle gas = 50 ppm |
| $H_2O$ > 1% | $H_2O$ = 12 %wt<br>$NH_3$ odor : concentration in bottle gas = 50 ppm<br>$H_2O$ = 5 %wt<br>$NH_3$ odor : concentration in bottle gas = 50 ppm | $H_2O$ = 11 %wt<br>$NH_3$ odor : concentration in bottle gas = 75 ppm<br><br>$H_2O$ = 5 %wt<br>$NH_3$ odor: concentration in bottle gas = 75 ppm |

**Claims**

1. Reactive composition comprising between 80 % and 98 % by weight of sodium bicarbonate, between 1 % and 12 % by weight of sodium carbonate and between 0.02 % and 2.0 % by weight of ammonia, defined as being gaseous ammonia ($NH_3$) released by distillation of an aqueous solution obtained by dissolving the composition in deionized water alkalinized with caustic soda at pH of more than 11 and expressed in the form of ammonium ions $NH_4^+$, **characterized in that** the composition comprises less than 0.9 % by weight of water measured by the loss of weight during 16 hours of a sample placed in a ventilated lab oven heated at 30 °C, and wherein the composition is in the form of particles having a diameter $D_{90}$ of less than 50 $\mu$m and a diameter $D_{50}$ of less than 35 $\mu$m, measured by laser diffractometry.

2. Reactive composition according to claim 1 wherein and the composition is in the form of particles having a diameter $D_{90}$ of less than 35 $\mu$m and a diameter $D_{50}$ of less than 20 $\mu$m, preferably a diameter $D_{90}$ of less than 30 $\mu$m and a diameter $D_{50}$ of less than 15 $\mu$m, measured by laser diffractometry.

3. Composition according to one of the preceding claims comprising between 2 % and 12 % by weight of sodium carbonate.

4. Composition according to one of the preceding claims, comprising between 85 % and 95 % by weight of sodium bicarbonate.

5. Composition according to one of the preceding claims, comprising from 0.02 % to 0.17 % by weight of ammonia, defined as being gaseous ammonia ($NH_3$) released by distillation of an aqueous solution obtained by dissolving the composition in deionized water alkalinized with caustic soda at pH of more than 11 and expressed in the form of ammonium ions $NH_4^+$.

6. Composition according to one of claims 1 to 4, comprising from 0.2 % to 0.7 % by weight of ammonia, defined as being gaseous ammonia ($NH_3$) released by distillation of an aqueous solution obtained by dissolving the composition in deionized water alkalinized with caustic soda at pH of more than 11 and expressed in the form of ammonium ions $NH_4^+$.

7. Composition according to one of claims 1 to 4 comprising more than 0.7 % and less than 2.0 % by weight of ammonia, defined as being gaseous ammonia ($NH_3$) released by distillation of an aqueous solution obtained by dissolving the composition in deionized water alkalinized with caustic soda at pH of more than 11 and expressed in the form of ammonium ions $NH_4^+$.

8. Composition according to one of the preceding claims, comprising from 0.01 % to 5 % by weight of additives selected from zeolites, dolomite, magnesium hydroxide, magnesium (hydroxy) carbonate, lime, calcium carbonate, sodium chloride, zinc chloride, sodium sulphate, calcium fluoride, hydrocarbons, talc, lignite coke, activated carbon or active charcoal, fatty acids and fatty acid salts.

9. Process for the production of a composition according to one of the preceding claims, according to which :

   • particles resulting from crude bicarbonate particles from an ammonia-soda plant are introduced into a gas stream at a temperature of more than 30°C comprising air, in order to form a gas stream laden with particles;
   • the gas stream laden with particles is introduced into a mill in order to form a gas stream comprising ground particles having a diameter a $D_{90}$ of less than 50 $\mu$m and a diameter $D_{50}$ of less than 35 $\mu$m, preferably a diameter $D_{90}$ of less than 35 $\mu$m and a diameter $D_{50}$ of less than 20 $\mu$m, even more preferably a diameter $D_{90}$ of less than 30 $\mu$m and a diameter $D_{50}$ of less than 15 $\mu$m measured by laser diffractometry.

10. Process according to claim 9, in which the crude bicarbonate particles from an ammonia-soda plant have a water content of at most 15 % in weight, preferably at most 12 %, more preferably at most 10 %, and even more preferably at most 8 % in weight of water before being introduced into the gas stream.

11. Process for the purification of a flue gas comprising acidic impurities, such as hydrogen chloride or sulphur oxides, according to which a reactive composition according to one of claims 1 to 8 is introduced into the flue gas, at a temperature of 100 to 600°C, and the flue gas is subsequently subjected to a filtration or a dedusting.

12. Process according to claim 11 wherein the flue gas subjected to a filtration is, subsequently the filtration, subjected to a selective catalytic reduction of nitrogen oxides (SCR DeNOx).

**Patentansprüche**

1. Reaktive Zusammensetzung, umfassend zwischen 80 Gew.-% und 98 Gew.-% Natriumbicarbonat, zwischen 1 Gew.-% und 12 Gew.-% Natriumcarbonat und zwischen 0,02 Gew.-% und 2,0 Gew.-% Ammoniak, das als gasförmiges Ammoniak ($NH_3$) definiert ist, das durch Destillation einer wässrigen Lösung freigesetzt wird, die durch Auflösen der Zusammensetzung in entionisiertem, mit Natronlauge auf einen pH-Wert von mehr als 11 alkalisiertem Wasser erhalten wird, und in der Form von Ammoniumionen $NH_4^+$ ausgedrückt ist, **dadurch gekennzeichnet, dass** die Zusammensetzung weniger als 0,9 Gew.-% Wasser umfasst, gemessen durch den Gewichtsverlust einer Probe, die in einem belüfteten, bei 30 °C geheizten Laborofen angeordnet ist, innerhalb von 16 Stunden, und wobei die Zusammensetzung in der Form von Partikeln mit einem Durchmesser $D_{90}$ von weniger als 50 $\mu$m und einem Durchmesser $D_{50}$ von weniger als 35 $\mu$m, gemessen durch Laserdiffraktometrie, vorliegt.

2. Reaktive Zusammensetzung gemäß Anspruch 1, wobei die Zusammensetzung in der Form von Partikeln mit einem Durchmesser $D_{90}$ von weniger als 35 $\mu$m und einem Durchmesser $D_{50}$ von weniger als 20 $\mu$m, vorzugsweise einem Durchmesser $D_{90}$ von weniger als 30 $\mu$m und einem Durchmesser $D_{50}$ von weniger als 15 $\mu$m, gemessen durch Laserdiffraktometrie, vorliegt.

3. Zusammensetzung gemäß einem der vorstehenden Ansprüche, umfassend zwischen 2 Gew.-% und 12 Gew.-% Natriumcarbonat.

4. Zusammensetzung gemäß einem der vorstehenden Ansprüche, umfassend zwischen 85 Gew.-% und 95 Gew.-% Natriumbicarbonat.

5. Zusammensetzung gemäß einem der vorstehenden Ansprüche, umfassend von 0,02 Gew.-% bis 0,17 Gew.-% Ammoniak, das als gasförmiges Ammoniak ($NH_3$) definiert ist, das durch Destillation einer wässrigen Lösung freigesetzt wird, die durch Auflösen der Zusammensetzung in entionisiertem, mit Natronlauge auf einen pH-Wert von mehr als 11 alkalisiertem Wasser erhalten wird, und in der Form von Ammoniumionen $NH_4^+$ ausgedrückt ist.

6. Zusammensetzung gemäß einem der Ansprüche 1 bis 4, umfassend von 0,2 Gew.-% bis 0,7 Gew.-% Ammoniak, das als gasförmiges Ammoniak ($NH_3$) definiert ist, das durch Destillation einer wässrigen Lösung freigesetzt wird, die durch Auflösen der Zusammensetzung in entionisiertem, mit Natronlauge auf einen pH-Wert von mehr als 11 alkalisiertem Wasser erhalten wird, und in der Form von Ammoniumionen $NH_4^+$ ausgedrückt ist.

7. Zusammensetzung gemäß einem der Ansprüche 1 bis 4, umfassend mehr als 0,7 Gew.-% und weniger als 2,0 Gew.-% Ammoniak, das als gasförmiges Ammoniak ($NH_3$) definiert ist, das durch Destillation einer wässrigen Lösung freigesetzt wird, die durch Auflösen der Zusammensetzung in entionisiertem, mit Natronlauge auf einen pH-Wert von mehr als 11 alkalisiertem Wasser erhalten wird, und in der Form von Ammoniumionen $NH_4^+$ ausgedrückt ist.

8. Zusammensetzung gemäß einem der vorstehenden Ansprüche, umfassend von 0,01 Gew.-% bis 5 Gew.-% an Zusatzstoffen ausgewählt aus Zeolithen, Dolomit, Magnesiumhydroxid, Magnesium(hydroxy)carbonat, Kalk, Calciumcarbonat, Natriumchlorid, Zinkchlorid, Natriumsulfat, Calciumfluorid, Kohlenwasserstoffen, Talkum, Braunkohlenkoks, aktivierten Kohlenstoff oder Aktivkohle, Fettsäuren und Fettsäuresalzen.

9. Verfahren zur Herstellung einer Zusammensetzung gemäß einem der vorstehenden Ansprüche, wobei:

   • Partikel, die aus rohen Bicarbonatpartikeln aus einer Ammoniak-Soda-Anlage stammen, in einen Gasstrom, der Luft umfasst, mit einer Temperatur von mehr als 30 °C eingeführt werden, um einen mit Partikeln beladenen Gasstrom zu bilden;
   • der mit Partikeln beladene Gasstrom in eine Mühle eingeführt wird, um einen Gasstrom zu bilden, der gemahlene Partikel umfasst, die einen Durchmesser $D_{90}$ von weniger als 50 $\mu$m und einen Durchmesser $D_{50}$ von weniger als 35 $\mu$m, vorzugsweise einen Durchmesser $D_{90}$ von weniger als 35 $\mu$m und einen Durchmesser $D_{50}$ von weniger als 20 $\mu$m, noch bevorzugter einen Durchmesser $D_{90}$ von weniger als 30 $\mu$m und einen Durchmesser $D_{50}$ von weniger als 15 $\mu$m, gemessen durch Laserdiffraktometrie, aufweisen.

10. Verfahren gemäß Anspruch 9, wobei die rohen Bicarbonatpartikel aus einer Ammoniak-Soda-Anlage einen Wassergehalt von höchstens 15 Gew.-%, vorzugsweise höchstens 12 Gew.-%, bevorzugter höchstens 10 Gew.-% und noch bevorzugter höchstens 8 Gew.-% an Wasser aufweisen, bevor sie in den Gasstrom eingeführt werden.

11. Verfahren zur Reinigung eines Rauchgases, das saure Verunreinigungen umfasst, wie z. B. Chlorwasserstoff oder Schwefeloxide, wobei eine reaktive Zusammensetzung gemäß einem der Ansprüche 1 bis 8 bei einer Temperatur von 100 bis 600 °C in das Rauchgas eingeführt wird und das Rauchgas anschließend einer Filtration oder Entstaubung unterzogen wird.

12. Verfahren gemäß Anspruch 11, wobei das einer Filtration unterzogene Rauchgas nach der Filtration einer selektiven katalytischen Reduktion von Stickstoffoxiden (SCR DeNOx) unterzogen wird.

**Revendications**

1. Composition réactive comprenant entre 80 % et 98 % en poids de bicarbonate de sodium, entre 1 % et 12 % en poids de carbonate de sodium et entre 0,02 % et 2,0 % en poids d'ammoniac, défini comme étant de l'ammoniac gazeux ($NH_3$) libéré par distillation d'une solution aqueuse obtenue par dissolution de la composition dans de l'eau déminéralisée alcalinisée avec de la soude caustique à un pH supérieur à 11 et exprimé en ions ammonium $NH_4^+$, **caractérisée en ce que** la composition comprend moins de 0,9 % en poids d'eau mesuré par la perte de poids pendant 16 heures d'un échantillon placé dans une étuve de laboratoire ventilée chauffée à 30 °C, et la composition étant sous la forme de particules ayant un diamètre $D_{90}$ inférieur à 50 $\mu$m et un diamètre $D_{50}$ inférieur à 35 $\mu$m, mesuré par diffractométrie laser.

2. Composition réactive selon la revendication 1, la composition étant sous la forme de particules ayant un diamètre $D_{90}$ inférieur à 35 $\mu$m et un diamètre $D_{50}$ inférieur à 20 $\mu$m, de préférence un diamètre $D_{90}$ inférieur à 30 $\mu$m et un diamètre $D_{50}$ inférieur à 15 $\mu$m, mesuré par diffractométrie laser.

3. Composition selon l'une des revendications précédentes comprenant entre 2 % et 12 % en poids de carbonate de sodium.

4. Composition selon l'une des revendications précédentes, comprenant entre 85 % et 95 % en poids de bicarbonate de sodium.

5. Composition selon l'une des revendications précédentes, comprenant de 0,02 % à 0,17 % en poids d'ammoniac, défini comme étant de l'ammoniac gazeux ($NH_3$) libéré par distillation d'une solution aqueuse obtenue par dissolution de la composition dans de l'eau déminéralisée alcalinisée avec de la soude caustique à un pH supérieur à 11 et exprimé sous la forme d'ions ammonium $NH_4^+$.

6. Composition selon l'une des revendications 1 à 4, comprenant de 0,2 % à 0,7 % en poids d'ammoniac, défini. comme étant de l'ammoniac gazeux ($NH_3$) libéré par distillation d'une solution aqueuse obtenue par dissolution de la composition dans de l'eau déminéralisée alcalinisée avec de la soude caustique à un pH supérieur à 11 et exprimé sous la forme d'ions ammonium $NH_4^+$.

7. Composition selon l'une des revendications 1 à 4 comprenant plus de 0,7 % et moins de 2,0 % en poids d'ammoniac, défini comme étant de l'ammoniac gazeux ($NH_3$) libéré par distillation d'une solution aqueuse obtenue par dissolution de la composition dans de l'eau déminéralisée alcalinisée avec de la soude caustique à un pH supérieur à 11 et exprimé en ions ammonium $NH_4^+$.

8. Composition selon l'une des revendications précédentes, comprenant de 0,01 % à 5 % en poids d'additifs choisis parmi des zéolites, une dolomite, l'hydroxyde de magnésium, le (hydroxy)carbonate de magnésium, la chaux, le carbonate de calcium, le chlorure de sodium, le chlorure de zinc, le sulfate de sodium, le fluorure de calcium, des hydrocarbures, le talc, le coke de lignite, le charbon activé ou le charbon actif, des acides gras et des sels d'acide gras.

9. Procédé de production d'une composition selon l'une des revendications précédentes, selon lequel :

   • des particules résultant de particules de bicarbonate brut provenant d'une installation de type Solvay sont introduites dans un flux de gaz à une température de plus de 30 °C comprenant de l'air, afin de former un flux de gaz chargé en particules ;
   • le flux de gaz chargé en particules est introduit dans un broyeur afin de former un flux de gaz comprenant des particules broyées ayant un diamètre $D_{90}$ inférieur à 50 $\mu$m et un diamètre $D_{50}$ inférieur à 35 $\mu$m, de préférence un diamètre $D_{90}$ inférieur à 35 $\mu$m et un diamètre $D_{50}$ inférieur à 20 $\mu$m, encore plus préférablement un diamètre $D_{90}$ inférieur à 30 $\mu$m et un diamètre $D_{50}$ inférieur à 15 $\mu$m mesuré par diffractométrie laser.

10. Procédé selon la revendication 9, dans lequel les particules de bicarbonate brut provenant d'une installation de type Solvay ont une teneur en eau d'au plus 15 % en poids, de préférence au plus 12 %, plus préférablement au plus 10 %, et encore plus préférablement au plus 8 % en poids d'eau avant d'être introduit dans le flux de gaz.

11. Procédé de purification d'un gaz de combustion comprenant des impuretés acides, telles que le chlorure d'hydrogène ou des oxydes de soufre, selon lequel une composition réactive selon l'une des revendications 1 à 8 est introduit dans le gaz de combustion, à une température de 100 à 600 °C, et le gaz de combustion est ensuite soumis à une filtration ou un dépoussiérage.

12. Procédé selon la revendication 11 dans lequel le gaz de combustion soumis à une filtration est, après la filtration, soumis à une réduction catalytique sélective d'oxydes d'azote (RCS DeNOx).

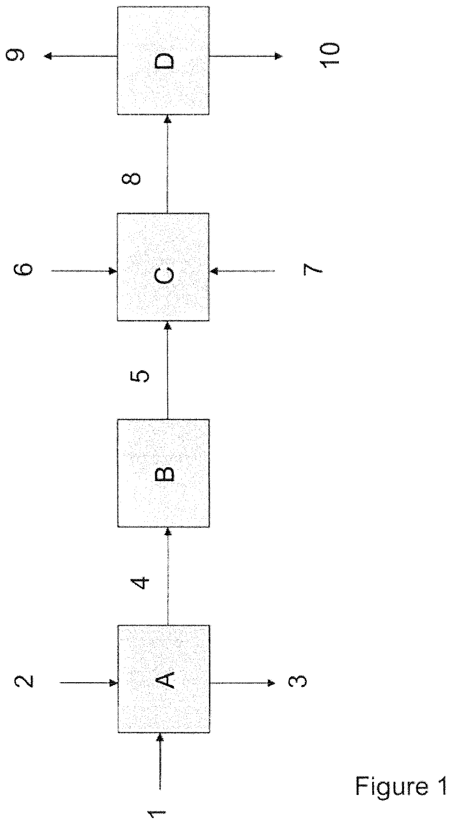

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9519835 A
- EP 0858429 A
- EP 0858428 A

### Non-patent literature cited in the description

- Ullmann's Encyclopedia of Industrial Chemistry Sodium carbonate. vol. 33, 307